# EUROPEAN PATENT SPECIFICATION

(11) **EP 3 040 540 B1**
(45) Date of publication and mention of the grant of the patent: **25.10.2017**
(21) Application number: 15201539.2
(22) Date of filing: 21.12.2015
(51) Int. Cl.: F02D 35/02

(54) **METHODS AND SYSTEMS TO CHARACTERIZE NOISES SENSED BY A KNOCK SENSOR**
VERFAHREN UND SYSTEME ZUR CHARAKTERISIERUNG VON DURCH EINEN KLOPFSENSOR ERFASSTEN GERÄUSCHEN
PROCÉDÉS ET SYSTÈMES POUR CARACTÉRISER DES BRUITS DÉTECTÉS PAR UN DÉTECTEUR DE CLIQUETIS

(30) Priority: 31.12.2014 US 201414587412
(43) Date of publication of application: 06.07.2016
(73) Proprietor: General Electric Company, Schenectady, NY 12345 (US)
(72) Inventor: BIZUB, Jeffrey Jacob, Waukesha, WI 53188 (US)
(74) Representative: Foster, Christopher Michael

(56) References cited:
- FR-A1- 2 844 302
- US-A- 5 821 412
- US-A1- 2008 190 271
- Zhong Zhang ET AL: "New Diagnostic Method of Knocking in a Spark-Ignition Engine Using the Wavelet Transform", SAE Technical Paper Series, 22 June 2000 (2000-06-22), XP055270621, Retrieved from the Internet: URL:http://papers.sae.org/2000-01-1801/ [retrieved on 2016-05-04]
- VULLI S ET AL: "Time-frequency analysis of single-point engine-block vibration measurements for multiple excitation-event identification", JOURNAL OF SOUND & VIBRATION, LONDON, GB, vol. 321, no. 3-5, 10 April 2009 (2009-04-10), pages 1129-1143, XP025960863, ISSN: 0022-460X, DOI: 10.1016/J.JSV.2008.10.011 [retrieved on 2008-11-28]
- M. CASTAGNÉ ET AL: "New Knock Localization Methodology for SI Engines", SAE TECHNICAL PAPER SERIES, vol. 1, 3 March 2003 (2003-03-03), XP055270619, US ISSN: 0148-7191, DOI: 10.4271/2003-01-1118
- Rodrigo Gerardin ET AL: "ANALYSIS OF SPARK IGNITION ENGINE KNOCK SIGNALS USING FOURIER AND DISCRETE WAVELET TRANSFORM", SAE Technical Paper Series, 6 October 2009 (2009-10-06), XP055270620, Retrieved from the Internet: URL:http://www.sciencedirect.com/science/a rticle/pii/S0022460X08008584 [retrieved on 2016-05-04]

## Description

### BACKGROUND

The subject matter disclosed herein relates to knock sensors, and more specifically, to knock sensors suitable for characterizing certain noise.

Combustion engines typically combust a carbonaceous fuel, such as natural gas, gasoline, diesel, and the like, and use the corresponding expansion of high temperature and pressure gases to apply a force to certain components of the engine, e.g., piston disposed in a cylinder, to move the components over a distance. Each cylinder may include one or more valves that open and close correlative with combustion of the carbonaceous fuel. For example, an intake valve may direct an oxidizer such as air into the cylinder, which is then mixed with fuel and combusted. Combustion fluids, e.g., hot gases, may then be directed to exit the cylinder via an exhaust valve. Accordingly, the carbonaceous fuel is transformed into mechanical motion, useful in driving a load. For example, the load may be a generator that produces electric power.

Knock sensors can be used to monitor multi-cylinder combustion engines. A knock sensor can be mounted to the exterior of an engine cylinder and used to determine whether or not the engine is running as desired. Sometimes a knock sensor detects a noise that may not be identifiable at the time. It would be desirable to have a way to characterize the noise.

Prior art documents:
US 2008/190271 A1,
Zhang et al , "New Diagnostic Method of Knocking in a Spark-Ignition Engine Using the Wavelet Transform", SAE Technical Paper Series, (2000-06-22),
Vullis et al, "Time-Frequency Analysis of Single-Point Engine-Block Vibration Measurements for Multiple Excitation-Event Identification", Journal of Sound & Vibration, London, GB, vol. 321, no. 3-5, p. 1129-1143.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a method of characterizing a noise signal includes receiving a noise signal sensed by a knock sensor coupled to a reciprocating device, preconditioning the noise signal to derive a preconditioned noise signal, applying an ADSR envelope to the preconditioned noise signal, extracting tonal information from the preconditioned noise signal, and creating a fingerprint of the noise signal based on the ADSR envelope, the tonal information, or a combination thereof

In a second embodiment, a system includes a controller configured to control a reciprocating device. The controller has a processor configured to receive a noise signal sensed by a knock sensor coupled to a reciprocating device, precondition the noise signal to derive a preconditioned noise signal, apply an ADSR envelope to the preconditioned noise signal, extract tonal information from the preconditioned noise signal, and create a fingerprint of the noise signal based on the ADSR envelope, the tonal information, or a combination thereof.

In a third embodiment, a non-transitory computer readable medium includes executable instructions that when executed cause a processor to receive, from a knock sensor coupled to a reciprocating device, noise data, derive, from the noise data, a noise signature, scale the noise signature such that the noise signature has a maximum amplitude of 1, apply an ASDR envelope to the noise signature, extract tonal information from the noise signature, fit the noise signature to a chirplet or a wavelet; and check a characterization of the noise signature using noise cancellation.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a portion of an engine driven power generation system in accordance with aspects of the present disclosure;
FIG. 2 is a side cross-sectional view of an embodiment of a piston assembly within a cylinder of the reciprocating engine shown in FIG. 1 in accordance with aspects of the present disclosure;
FIG. 3 is an embodiment of an engine noise plot of data measured by the knock sensor shown in FIG. 2 in accordance with aspects of the present disclosure;
FIG. 4 is an embodiment of a scaled version of the sample engine noise plot shown in FIG. 3 in accordance with aspects of the present disclosure;
FIG. 5 is an embodiment of a sample scaled engine noise plot shown in FIG. 4 with four principle parameters of an attack, decay, sustain, release (ADSR) envelope overlaid in accordance with aspects of the present disclosure;
FIG. 6 is an embodiment of a scaled engine noise plot and ASDR envelope shown in FIG. 5 with the extracted tones overlaid in accordance with aspects of the present disclosure;
FIG. 7 is a flow chart showing an embodiment of a process for characterizing a noise in accordance with aspects of the present disclosure;
FIG. 8 is a flow chart showing an embodiment of a process for identifying a fingerprint shown in FIG. 7 in accordance with aspects of the present disclosure.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

When using a knock sensor to monitor a reciprocating device (a combustion engine), occasionally the knock sensor system records a noise, such as an abnormal or undesired noise that may not be identified at that time. Rather than ignore and discard the unidentifiable noises, it may be advantageous to save recordings of unidentifiable noises for analysis at a later date. However, having a log of uncharacterized unidentifiable noises that cannot be sorted greatly reduces the utility of the data set. As such, it would be beneficial to characterize and/or categorize the collected unidentifiable noises so they can be more easily analyzed, thus making future (or current) analysis of the noises easier.

Advantageously, the techniques described herein may create a sound "fingerprint" of certain engine sounds or noise. As described in further detail below, systems and method are provided for identifying and classifying noise via an Attack-Decay-Sustain-Release (ASDR) envelope and/or joint time-frequency techniques. The joint time-frequency techniques may include cepstrum techniques, quefrency techniques, chirplet techniques, and/or wavelet techniques to develop an acoustic model or fingerprint of the unknown noise, as described in more detail below.

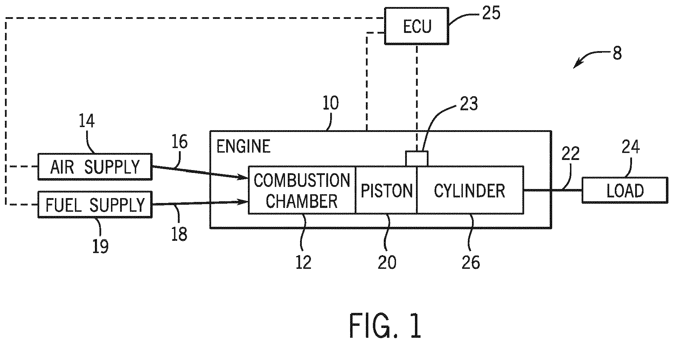

Turning to the drawings, FIG. 1 illustrates a block diagram of an embodiment of a portion of an engine driven power generation system 8. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). Though FIG. 1 shows a combustion engine 10, it should be understood that any reciprocating device may be used. An air supply 14 is configured to provide a pressurized oxidant 16, such as air, oxygen, oxygen-enriched air, oxygen-reduced air, or any combination thereof, to each combustion chamber 12. The combustion chamber 12 is also configured to receive a fuel 18 (e.g., a liquid and/or gaseous fuel) from a fuel supply 19, and a fuel-air mixture ignites and combusts within each combustion chamber 12. The hot pressurized combustion gases cause a piston 20 adjacent to each combustion chamber 12 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders (e.g., 1-24). For example, in certain embodiments, the system 8 may include a large-scale industrial reciprocating engine having 4, 6, 8, 10, 16, 24 or more pistons 20 reciprocating in cylinders. In some such cases, the cylinders and/or the pistons 20 may have a diameter of between approximately 13.5 - 34 centimeters (cm). In some embodiments, the cylinders and/or the pistons 20 may have a diameter of between approximately 10-40 cm, 15-25 cm, or about 15 cm. The system 10 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The driven power generation system 8 may include one or more knock sensors 23 suitable for detecting engine "knock." The knock sensor 23 may be any sensor configured to sense vibrations caused by the engine 10, such as vibration due to detonation, pre-ignition, and or pinging. The knock sensor 23 is shown communicatively coupled to a controller, engine control unit (ECU) 25. During operations, signals from the knock sensor 23 are communicated to the ECU 25 to determine if knocking conditions (e.g., pinging) exist. The ECU 25 may then adjust certain engine 10 parameters to ameliorate or eliminate the knocking conditions. For example, the ECU 25 may adjust ignition timing and/or adjust boost pressure to eliminate the knocking. As further described herein, the knock sensor 23 may additionally derive that certain vibrations should be further analyzed and categorized to detect, for example, undesired engine conditions.

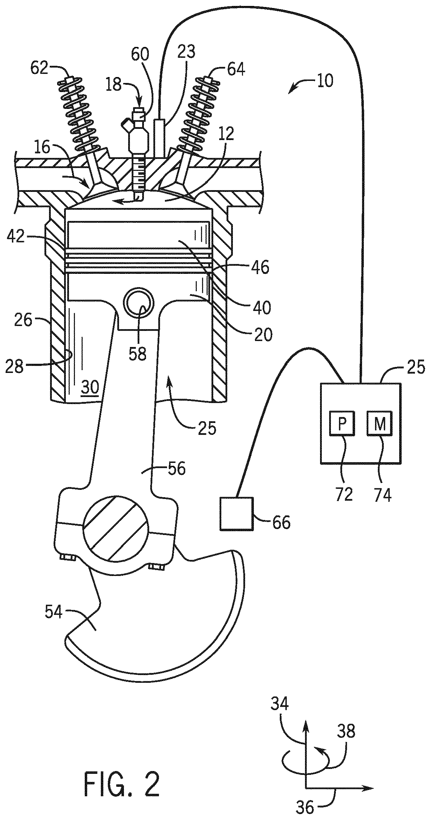

FIG. 2 is a side cross-sectional view of an embodiment of a piston assembly 25 having a piston 20 disposed within a cylinder 26 (e.g., an engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., a top land). The top portion 40 generally blocks the fuel 18 and the air 16, or a fuel-air mixture 32, from escaping from the combustion chamber 12 during reciprocating motion of the piston 20.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. As shown, the combustion chamber 12 is positioned adjacent to the top land 40 of the piston 24. A fuel injector 60 provides the fuel 18 to the combustion chamber 12, and an intake valve 62 controls the delivery of air 16 to the combustion chamber 12. An exhaust valve 64 controls discharge of exhaust from the engine 10. However, it should be understood that any suitable elements and/or techniques for providing fuel 18 and air 16 to the combustion chamber 12 and/or for discharging exhaust may be utilized, and in some embodiments, no fuel injection is used. In operation, combustion of the fuel 18 with the air 16 in the combustion chamber 12 cause the piston 20 to move in a reciprocating manner (e.g., back and forth) in the axial direction 34 within the cavity 30 of the cylinder 26.

During operations, when the piston 20 is at the highest point in the cylinder 26 it is in a position called top dead center (TDC). When the piston 20 is at its lowest point in the cylinder 26, it is in a position called bottom dead center (BDC). As the piston 20 moves from top to bottom or from bottom to top, the crankshaft 54 rotates one half of a revolution. Each movement of the piston 20 from top to bottom or from bottom to top is called a stroke, and engine 10 embodiments may include two-stroke engines, three-stroke engines, four-stroke engines, five-stroke engine, six-stroke engines, or more.

During engine 10 operations, a sequence including an intake process, a compression process, a power process, and an exhaust process typically occurs. The intake process enables a combustible mixture, such as fuel and air, to be pulled into the cylinder 26, thus the intake valve 62 is open and the exhaust valve 64 is closed. The compression process compresses the combustible mixture into a smaller space, so both the intake valve 62 and the exhaust valve 64 are closed. The power process ignites the compressed fuel-air mixture, which may include a spark ignition through a spark plug system, and/or a compression ignition through compression heat. The resulting pressure from combustion then forces the piston 20 to BDC. The exhaust process typically returns the piston 20 to TDC while keeping the exhaust valve 64 open. The exhaust process thus expels the spent fuel-air mixture through the exhaust valve 64. It is to be noted that more than one intake valve 62 and exhaust valve 64 may be used per cylinder 26.

The depicted engine 10 also includes a crankshaft sensor 66, the knock sensor 23, and the engine control unit (ECU) 25, which includes a processor 72 and memory 74. The crankshaft sensor 66 senses the position and/or rotational speed of the crankshaft 54. Accordingly, a crank angle or crank timing information may be derived. That is, when monitoring combustion engines, timing is frequently expressed in terms of crankshaft 54 angle. For example, a full cycle of a four stroke engine 10 may be measured as a 720° cycle. The knock sensor 23 may be a Piezo-electric accelerometer, a microelectromechanical system (MEMS) sensor, a Hall effect sensor, a magnetostrictive sensor, and/or any other sensor designed to sense vibration, acceleration, sound, and/or movement. In other embodiments, sensor 23 may not be a knock sensor in the traditional sense, but any sensor that may sense vibration, pressure, acceleration, deflection, or movement.

Because of the percussive nature of the engine 10, the knock sensor 23 may be capable of detecting signatures even when mounted on the exterior of the cylinder 26. However, the knock sensor 23 may be disposed at various locations in or about the cylinder 26. Additionally, in some embodiments, a single knock sensor 23 may be shared, for example, with one or more adjacent cylinders 26. In other embodiments, each cylinder 26 may include one or more knock sensors 23. The crankshaft sensor 66 and the knock sensor 23 are shown in electronic communication with the engine control unit (ECU) 25. The ECU 25 includes a processor 72 and a memory 74. The memory 74 may store computer instructions that may be executed by the processor 72. The ECU 25 monitors and controls and operation of the engine 10, for example, by adjusting combustion timing, valve 62, 64, timing, adjusting the delivery of fuel and oxidant (e.g., air), and so on.

Advantageously, the techniques described herein may use the ECU 25 to receive data from the crankshaft sensor 66 and the knock sensor 23, and then to creates a "noise" signature by plotting the knock sensor 23 data against the crankshaft 54 position. The ECU 25 may then go through the process of analyzing the data to derive normal (e.g.., known and expected noises) and abnormal signatures (e.g., unknown or unexpected noises). The ECU 25 may then characterize the abnormal signatures, as described in more detail below. By providing for signature analysis, the techniques described herein may enable a more optimal and a more efficient operations and maintenance of the engine 10.

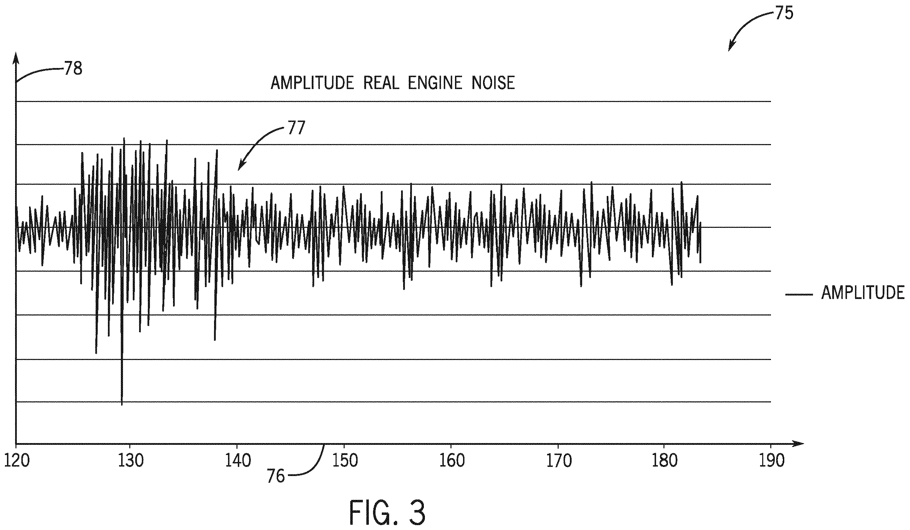

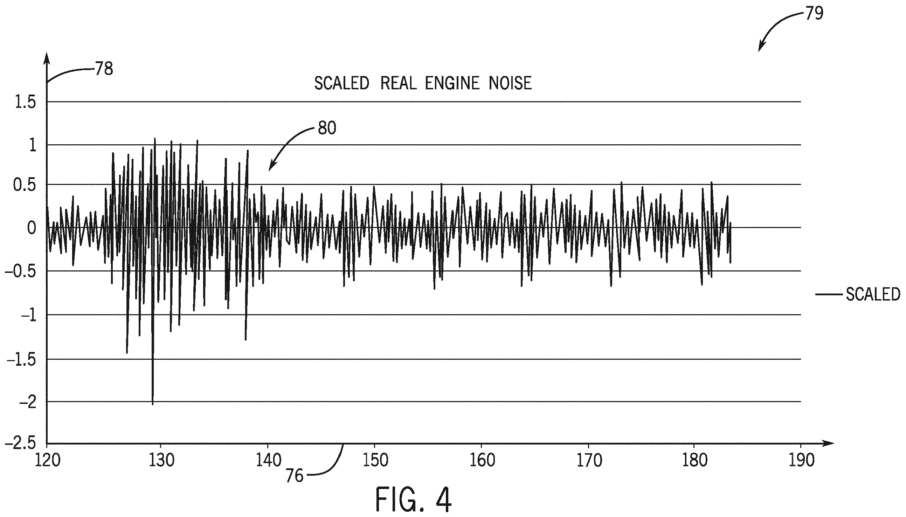

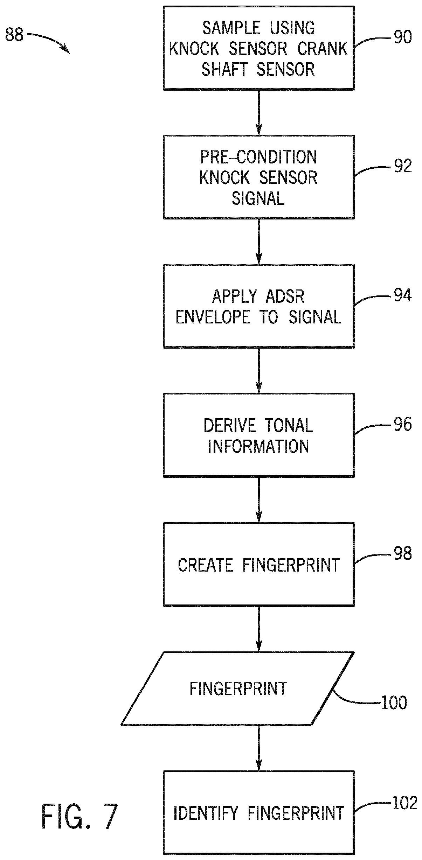

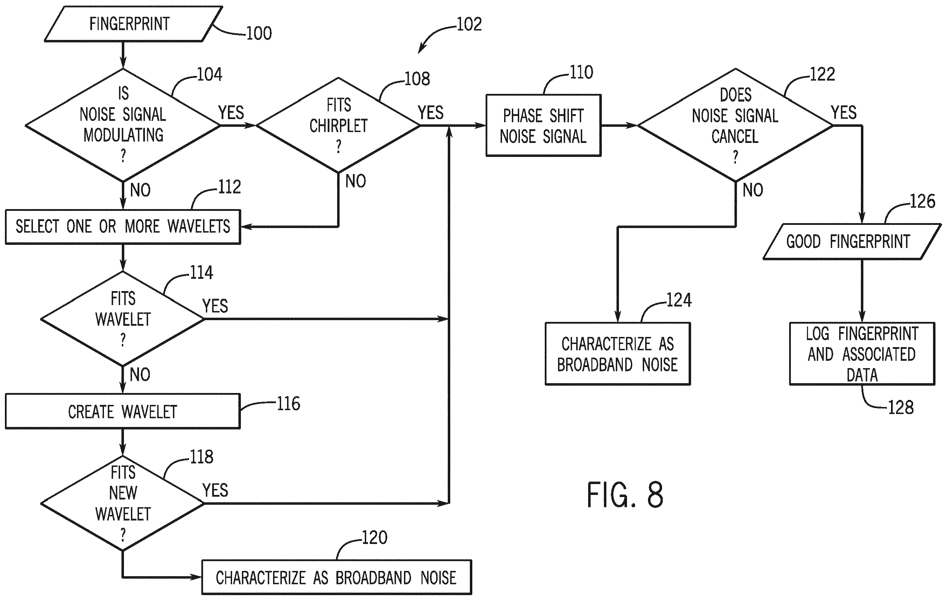

FIGS. 3-6 are illustrative of data that may be undergoing data processing, for example, via a process described in more detail with respect to FIG. 7 and 8. The data for FIGS. 3-6 may include data transmitted via the knock sensor 23 and the crank angle sensor 66. For example, FIG. 3 is an embodiment of a raw engine noise plot 75 derived (e.g., by the ECU 25) of noise data measured by the knock sensor 23 in which x-axis 76 is crankshaft 54 position, which is correlative of time. The plot 75 is generated when the ECU 25 combines the data received from the knock sensor 23 and the crankshaft sensor 66 during operations of the engine 10. In the depicted embodiment, an amplitude curve 77 of the knock sensor 23 signal is shown, with an amplitude axis 78. That is, the amplitude curve 77 includes amplitude measurements of vibration data (e.g., noise, sound data) sensed via the knock sensor 23 plotted against crank angle. It should be understood that this is merely a plot of a sample data set, and not intended to limit plots generated by the ECU 25. The curve 77 may then be scaled for further processing, as shown in FIG. 4.

FIG. 4 is an embodiment of a scaled engine noise plot 79, which may be derived by the ECU 25. In the scaled plot 79, the raw engine noise from amplitude plot 75 shown in FIG. 3 has been scaled to derive a scaled amplitude curve 80. In this case, a single multiplier has been applied to each data point such that the maximum positive value of the scaled amplitude curve 80 is 1. Note that the multiplier applied to each point of curve 80 in order to produce a maximum positive value of 1 may result in negative values that are less than or greater than -1. That is, the maximum negative value may be -0.5, or it may be -1.9, as shown in scaled engine noise plot 79 shown in FIG. 4.

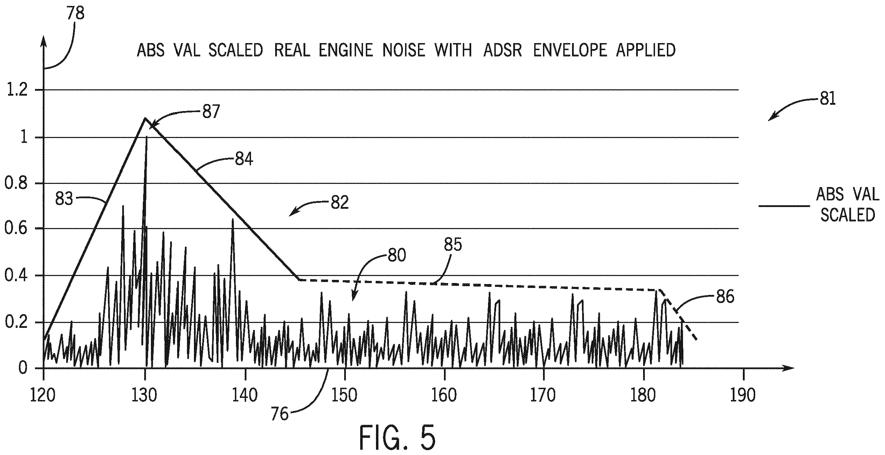

FIG. 5 is an embodiment of a scaled engine noise plot 81 with four principle parameters of an attack, decay, sustain, release (ADSR) envelope 82 laid over the top of the plot. The ADSR envelope 82 is typically used in music synthesizers in order to mimic the sound of musical instruments. Advantageously, the techniques described herein apply the ADSR envelope 82 to knock sensor 23 data to more quickly and efficiently provide for certain noise analysis, as further described below. The four principle parameters of the ADSR envelope are attack 83, decay 84, sustain 85, and release 86. The attack 80 occurs from the start of the noise to a peak amplitude 87 of the scaled curve 80. The decay 84 occurs from in the run down from the peak amplitude to a designated sustain 85 level, which may be some specified percent of the maximum amplitude. It should be understood that the order of the four parameters does not have to be attack, decay, sustain, and release. For example, for some noises, the order may be attack, sustain, decay, and release. In such cases, an ASDR, rather than ADSR, envelope would be applied. For the sake of simplicity, this will be referred to as an "ADSR envelope," but it should be understood that the term applies to a noise regardless of the order of the parameters. The sustain 85 level is the main level during the noise's duration. In some embodiments, the sustain 85 level may occur at 55% of the maximum amplitude. In other embodiments, the sustain 85 level may be 35%, 40%, 45%, 50%, 60%, or 65% of the maximum amplitude. A user, or the ECU 25, may check whether the sustain level is as desired by determining whether the sustain 85 level is held for at least 15% of the duration of the signature. If the sustain 85 lasts more than 15% of the duration of the signature, the sustain 85 level is set as desired. The release 86 occurs during the run down from the sustain 85 level back to zero.

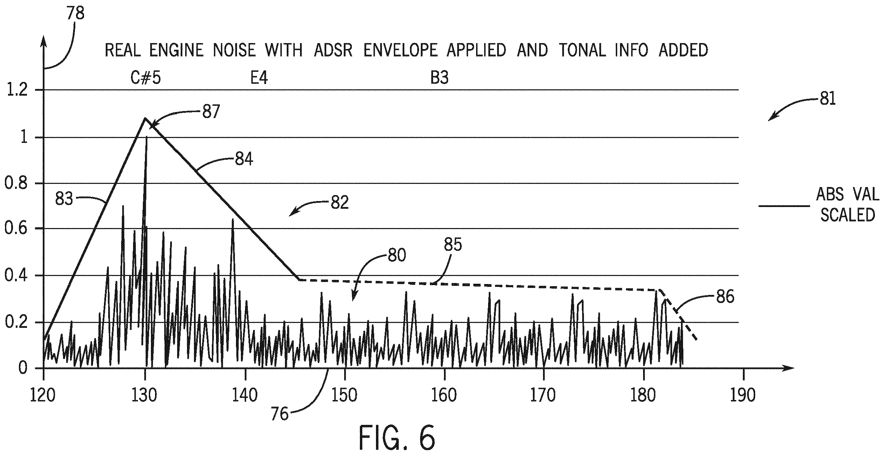

FIG. 6 shows the same scaled engine noise plot 79 shown in FIGS. 4 and 5 with certain tones overlaid. After applying the ADSR envelope 82, the ECU 25 may extract three to five of the strongest frequencies in the noise and convert them into musical tones. For example, a lookup table mapping frequency ranges to musical tones may be used. Additionally or alternatively, equations may be used based on the observation that pitch is typically perceived as the logarithm of frequency for equal temperament systems of tuning, or equations for other musical temperament systems. In other embodiments, more or less frequencies may be extracted. In the plot 81 shown in FIG. 6 the three prominent (e.g., extracted) tones are C#5, E4, and B3. It should be understood, however, and these three tones are merely examples of possible tones and not intended to limit what tones may be present in a recorded noise.

FIG. 7 is a flow chart showing an embodiment of a process 88 for characterizing a noise, such as noise sensed via the knock sensor 23. By characterizing an abnormal or unidentifiable noise, the noise can be logged and sorted for analysis, including future analysis and/or real-time analysis. The process 88 may be implemented as computer instructions or executable code stored in the memory 74 and executable by the processor 72 of the ECU 25. In block 90, a sample of data is taken using the knock sensor 23 and the crankshaft sensor 66. For example, the sensors 66, 23 collect data and then transmit the data to the ECU 25. The ECU 25 then logs the crankshaft 54 angles at the start of data collection and at the end of data collection, as well as the time and/or crankshaft angle at the maximum (e.g., amplitude 87) and minimum amplitudes.

In block 92, the ECU 25 pre-conditions the knock sensor 23 data. This block 92 includes plotting the raw knock sensor 23 data against crankshaft 54 position. A sample raw engine noise plot was shown in FIG. 3 as the amplitude plot 75. This block 92 includes scaling the raw engine noise data. To scale the data, the ECU 25 determines a multiplier that would result in a maximum amplitude of positive 1. It should be noted that the maximum negative value has no effect on multiplier selection. The ECU 25 then multiplies each data point (e.g., data point in amplitude curve 77) by the multiplier, to derive the scaled amplitude curve 80, as shown in FIG. 4. It should be understood that the scaled engine noise plot 79 in FIG. 4 showing the scaled amplitude curve 80 is merely an example and not intended to limit the scope of this disclosure to plots that look the same or similar to scaled engine noise plot 79.

In block 94, the ECU 25 applies the ASDR envelope 82 to the engine noise signal. The processing in this block was discussed in describing FIG. 5. The ASDR envelope 82 is used to divide a noise data set into four different parameters or phases (attack 83, decay 84, sustain 85, release 86). As previously discussed, it should be understood that the order of the four parameters does not have to be attack, decay, sustain, and release. For example, for some noises, the order may be attack, sustain, decay, and release. For the sake of simplicity, this will be referred to as an "ADSR envelope," but it should be understood that the term applies to a noise regardless of the order of the parameters. Traditionally, the ASDR envelope 82 is used the process of reproducing a musical sound like that of a trumpet. However, in the techniques described herein, the ASDR envelope may be used to categorize and characterize noises so they can be cataloged and sorted, either for later analysis, real-time analysis, or some other purpose. The four principle parameters of the ADSR envelope 82 are attack 83, decay 84, sustain 85, and release 86. The attack 83 occurs from the start of the noise to the peak amplitude 87. The decay 84 occurs from in the run down from the peak amplitude 87 to a designated sustain 85 level, which is some specified percent of the maximum amplitude. The sustain 85 level is the main level during the noise's duration. In some embodiments, the sustain 85 level may occur at 55% of the maximum amplitude. In other embodiments, the sustain 85 level may be 35%, 40%, 45%, 50%, 60%, or 65% of the maximum amplitude. A user, or the ECU 25, may check whether the sustain level is as desired by determining whether the sustain 85 level is held for at least 15% of the duration of the signature. If the sustain 85 lasts more than 15% of the duration of the signature, the sustain 85 level is set as desired. The release 86 occurs during the run down from the sustain 85 level back to zero. In block 94 the ECU 25 measures the time from zero to maximum amplitude 87 (the maximum amplitude should have a value of 1). The ECU 25 then measures the run down time from the maximum amplitude 87 to the designated sustain level 85. The ECU 25 then measures the level and time that the noise sustains. Finally, the ECU 25 measures the time it takes for the noise to run down from the sustain level 85 to zero. The ECU 25 then logs the ADSR vectors or segments defining the ADSR envelope 82.

In block 96, the ECU 25 derives tonal information (e.g., musical tones) from the data. This block was discussed in the description of FIG. 6. During this block, the ECU 25 extracts tonal information from the data, identifying the three to five strongest tones in the data. FIG. 6 shows three tones derived from the signal, C#5, E4, and B3. The ECU 25 may derive five or more tones from the data. Though FIG. 6 shows tones C#5, E4, and B3, it should be understood that these tones are examples and the ECU 25 may derive any tones from the data. The ECU 25 then logs the derived tonal information, which may include the frequency of the fundamental derived tones (i.e., the lowest frequency tones), the order of the fundamental derived tones, the frequency of the harmonic derived tones (i.e., tones with a frequency that is an integer multiple of the fundamental frequency), the order of the harmonic derived tones, and any other relevant tonal information.

In block 98 the ECU creates a fingerprint 100 based upon the ASDR envelope 82 and the tonal information derived in blocks 94 and 96. The fingerprint 100 includes a characterization of the abnormal or unidentifiable noise, breaking the noise up into its component parts (e.g., ADSR envelope 82 components 83, 84, 85, 86) and quantifying those parts so the noise can be cataloged, categorized, and sorted. At this point in the process, fingerprint 100 is based mostly upon the ADSR envelope in block 94 and the tonal information derived in block 96.

In block 102, the fingerprint 100 is identified and checked. Using a number of techniques, which will be described later, the fingerprint 100 may be modified or added to and then checked again.

FIG. 8 is a flow chart showing further details of an embodiment of process 102, which identifies the fingerprint 100 depicted in FIG. 7. The process 102 may the implemented as computer instructions or executable code stored in the memory 74 and executable by the processor 72 of the ECU 25. In decision 104, the ECU 25 determines whether or not the noise signal is modulating (i.e., changing from one tone to another). If the signal is not modulating (decision 104), then the ECU 25 moves on to block 112 and attempts to find a matching wavelet. A wavelet, effectively a piece or component of a wave, is a wave-like oscillation with an amplitude that begins at zero, increases, decreases, or both, and then returns to zero. Wavelets can be modified by adjusting the frequency, amplitude, and duration, which makes them very useful in signal processing. For example, in continuous wavelet transforms a given signal may be reconstructed by integrating over the various modified frequency components. Commonly used "mother" wavelets include Meyer, Morlet, and Mexican hat wavelets. However, new wavelets may also be created if the mother wavelets do not fit.

If the sound is modulating (decision 104), the ECU 25 moves on to decision 108 and determines whether or not the noise signal fits a chirplet. A chirp is a signal in which the frequency increases or decreases with time. Just as a wavelet is a piece of a wave, a chirplet is a piece of a chirp. Much like wavelets, the characteristics of a chirplet can be modified, and then multiple chirplets combined (i.e., a chirplet transform), in order to approximate a signal. A chirplet may modulate (i.e., change frequency) upward or downward. In decision 108, the ECU 25 may adjust the modulation of chirplets in order to fit the chirplets to the noise signal. If the ECU 25, after adjusting the modulation of chirplets, can adjust chriplets to fit the noise signal, then the ECU 25 logs whether there was a chirplet that fit the signal, and if so, the first frequency of the chirplet, the second frequency of the chirplet, and the rate of chirplet modulation in frequency/(crank angle) or frequency per second. The ECU 25 then moves to block 110, in which the ECU 25 phase shifts the noise signal in order to check the fingerprint 100. In block 110, the ECU 25 creates a generated noise signal based upon the ASDR envelope 82 vectors or other components, extracted tonal information, and chirplet or wavelet fits. The ECU 25 then shifts (block 110) the generated signal 180 degrees out of phase. If the characterization of the noise signal is correct, the phase-shifted generated noise signal should cancel out the noise signal.

If the noise signal does not fit a chirplet (decision 108), the ECU 25 moves on to block 112 and attempts to fit a wavelet to the noise signal. In block 112, the ECU 25 selects one or more wavelets that may fit the noise signal. The selected wavelet or wavelets may be a Meyer wavelet, a Morlet wavelet, a Mexican hat wavelet, or some other known wavelet. In decision 114, the ECU 25 determines whether or not the selected wavelet or wavelets fits the noise signal. If the selected wavelet fits (decision 114), the ECU 25 logs that there was a wavelet fit, the mother wavelet type, the first scale range of the wavelet, and the second scale range of the wavelet. If the wavelet fits (decision 114), the ECU 25 moves on to block 110, in which the ECU 25 phase shifts the noise signal in order to check the fingerprint 100. If one of the selected wavelets does not fit the noise signal (decision 114), the ECU 25 may move on to block 116 and create a wavelet. In decision 118, the ECU 25 determines if the newly created wavelet fits the noise signal. If the created wavelet fits (decision 118), the ECU 25 logs that there was a wavelet fit, the first scale range of the wavelet, and the second scale range of the wavelet. If the created wavelet fits the noise signal (decision 118), the ECU 25 moves on to block 110, in which the ECU phase shifts the noise signal in order to check the fingerprint 100. If the new wavelet does not fit (decision 118), the ECU 25 moves on to block 120 in which it characterizes the noise signal as broadband noise.

Returning now to block 110, if the ECU 25 finds a chirplet or wavelet that fits the noise signal, the ECU 25 will check the fit by attempting noise cancellation. Accordingly, in block 110, the ECU 25 creates a generated noise signal based upon the ASDR envelope 82 vectors or other components, extracted tonal information, and chirplet or wavelet fits. The ECU 25 then shifts (block 110) the generated signal by 180 degrees. The ECU 25 then determines (decision 122) whether the shifted signal cancels out the original noise signal within a desired residual tolerance. If the shifted signal cancels out (decision 122) the original noise signal within a desired residual tolerance, the ECU 25 determines that the fingerprint 100 is a "good" fingerprint 126 and moves on to block 128, in which the ECU 25 logs the coefficients and associated data, which may include the root mean squared (RMS) value of the signal, or the RMS error. The ECU 25 may log other data as well, including, but not limited to crankshaft angles at the beginning or end of the signal, ASDR envelope 82 vectors or other ADSR components, fundamental spectral tones, harmonic spectral tones, order of spectral tones, order of harmonic tones, whether a chirplet fit, the first chirplet frequency, the second chirplet frequency, the rate of chirplet modulation, whether a wavelet fit, the mother wavelet type, the first scale range of the wavelet, the second scale range of the wavelet, the maximum amplitude value and time, the minimum amplitude value and time, the RMS value of the signal, the RMS error of the signal against the generated signal, and whether or not the noise is classified as broadband noise. This logged data, and other data logged allows the ECU 25 to characterize and categorize most unknown noises so these noises can be stored on the memory component 74 of the ECU 25, perhaps transferred to some other memory device, and then logged and sorted in a database for future analysis. If, on the other hand, the ECU 25 determines (decision 122) that the shifted signal did not cancel out the original noise signal within a residual tolerance, the ECU 25 moves on to block 124 in which the noise signal is characterized as broadband noise.

Technical effects of the invention include characterizing a noise signal and deriving a signature from the noise signal, which may additionally include preconditioning the noise signal, applying an ASDR envelope to the noise signal, extracting tonal information (e.g., musical tones) from the noise signal and fitting the noise signal to a chirplet and/or a wavelet.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method of analyzing a noise signal, comprising:
receiving a noise signal (75) sensed by a knock sensor (28) disposed in a reciprocating device (24), wherein the reciprocating device is a combustion engine;
preconditioning (92) the noise signal (75) to derive a preconditioned noise signal (79); **characterized by** applying (94) an Attack-Decay-Sustain-Release (ADSR) envelope (82) to the preconditioned noise signal (79);
extracting (96) tonal information from the preconditioned noise signal (79); and
creating (98) a fingerprint (100) of the noise signal (75) based on a combination of the ADSR envelope and the tonal information.

2. The method of claim 1, wherein the preconditioning (92) the noise signal comprises scaling the noise signal (75), wherein each data point included in the noise signal (75) is multiplied by a multiplier such that the noise signal has a maximum amplitude of 1.

3. The method of claim 1 or 2, wherein applying (94) an ADSR envelope (82) comprises:
measuring a first period of time between a start of the preconditioned noise signal (79) and a time at which the preconditioned noise signal (79) reaches a maximum amplitude (87);
measuring a second period of time between the time at which the preconditioned noise signal (79) reaches the maximum amplitude (87) and a second time at which the noise signal (79) runs down to a sustain level (85);
measuring a third period of time during which the preconditioned noise signal (79) sustains; and
measuring a fourth period of time during which the preconditioned noise signal (79) runs down from the sustain level (85) to zero.

4. The method of any of claims 1 to 3, comprising fitting the preconditioned noise signal (79) to a chirplet by:
determining (104) whether the preconditioned noise signal (79) modulates upward or downward; and
adjusting (105) a modulation rate of the chirplet until the chirplet fits the noise signal (79).

5. The method of claim 4, wherein if the preconditioned noise signal (79) is not attempting (112) to find a modulating matching wavelet, the wavelet comprises a Meyer wavelet, a Morlet wavelet, a Mexican hat wavelet, or a combination thereof.

6. The method of any of claims 1 to 5, comprising verifying a characterization of the noise signal (79) via noise cancellation analysis.

7. The method of claim 6 wherein the noise cancellation analysis comprises:
generating a generated signal based on the characterization of the preconditioned noise signal (79);
shifting the generated signal 180 degrees out of phase to derive a shifted signal;
combining the shifted signal to the preconditioned noise signal (79) to derive a residual tolerance, and;
accepting the characterization of the preconditioned noise signal (79) if a residual tolerance between the noise signal and the generated signal is less than a desired threshold value.

8. The method of any preceding claim, wherein the tonal information comprises musical tones.

9. A computer program comprising computer program code means adapted to perform the method of any of claims 1 to 8, when executed by a computer processor.

10. The computer program of claim 9, embodied on a computer-readable medium.

11. A system, comprising:
a controller (25) configured to control a reciprocating device (20), wherein the controller comprises a processor (72) configured to execute the computer program of claim 9 to perform the steps of the method of any of claims 1 to 8.

## Patentansprüche

1. Verfahren zum Analysieren eines Geräuschsignals, umfassend:
Empfangen eines Geräuschsignals (75), erfasst durch einen Klopfsensor (28), angeordnet in einer Reziprokationsvorrichtung (24), wobei die Reziprokationsvorrichtung ein Verbrennungsmotor ist;
Vorkonditionieren (92) des Geräuschsignals (75), um ein vorkonditioniertes Geräuschsignal (79) abzuleiten;
**gekennzeichnet durch**
Anwenden (94) einer Anstieg-Abfall-Halten-Freigabe- bzw. ADSR-Hüllkurve (82) auf das vorkonditionierte Geräuschsignal (79);
Extrahieren (96) tonaler Informationen aus dem vorkonditionierten Geräuschsignal (79); und
Erzeugen (98) eines Fingerabdrucks (100) des Geräuschsignals (75) basierend auf einer Kombination der ADSR-Hüllkurve und der tonalen Informationen.

2. Verfahren nach Anspruch 1, wobei das Vorkonditionieren (92) des Geräuschsignals umfasst, das Geräuschsignal (75) zu skalieren, wobei jeder in dem Geräuschsignal (75) enthaltene Datenpunkt mit einem Multiplikator derart multipliziert wird, dass das Geräuschsignal eine maximale Amplitude von 1 aufweist.

3. Verfahren nach Anspruch 1 oder 2, wobei Anwenden (94) einer ADSR-Hüllkurve (82) umfasst:
Messen einer ersten Zeitperiode zwischen einem Beginn des vorkonditionierten Geräuschsignals (79) und einer Zeit, zu der das vorkonditionierte Geräuschsignal (79) eine maximale Amplitude (87) erreicht;
Messen einer zweiten Zeitperiode zwischen der Zeit, zu der das vorkonditionierte Geräuschsignal (79) die maximale Amplitude (87) erreicht, und einer zweiten Zeit, zu der das Geräuschsignal (79) auf einen Haltepegel (85) absinkt;
Messen einer dritten Zeitperiode, während der das vorkonditionierte Geräuschsignal (79) gehalten wird; und
Messen einer vierten Zeitperiode, während der das vorkonditionierte Geräuschsignal (79) von dem Haltepegel (85) auf null absinkt.

4. Verfahren nach einem der Ansprüche 1 bis 3, umfassend, das vorkonditionierte Geräuschsignal (79) an ein Chirplet anzupassen durch:
Bestimmen (104), ob das vorkonditionierte Geräuschsignal (79) nach oben oder nach unten moduliert; und
Anpassen (105) einer Modulationsrate des Chirplets, bis das Chirplet dem Geräuschsignal (79) entspricht.

5. Verfahren nach Anspruch 4, wobei, wenn das vorkonditionierte Geräuschsignal (79) nicht versucht (112), ein modulierendes übereinstimmendes Wavelet zu finden, das Wavelet ein Meyer-Wavelet, ein Morlet-Wavelet, ein Mexican-Hat-Wavelet oder eine Kombination davon umfasst.

6. Verfahren nach einem der Ansprüche 1 bis 5, umfassend, eine Charakterisierung des Geräuschsignals (79) über Rauschunterdrückungsanalyse zu verifizieren.

7. Verfahren nach Anspruch 6, wobei die Rauschunterdrückungsanalyse umfasst:
Erzeugen eines erzeugten Signals basierend auf der Charakterisierung des vorkonditionierten Geräuschsignals (79);
Verschieben des erzeugten Signals um 180 Grad aus der Phase, um ein verschobenes Signal abzuleiten;
Kombinieren des verschobenen Signals mit dem vorkonditionierten Geräuschsignal (79), um eine Resttoleranz abzuleiten; und
Akzeptieren der Charakterisierung des vorkonditionierten Geräuschsignals (79), wenn eine Resttoleranz zwischen dem Geräuschsignal und dem erzeugten Signal kleiner als ein gewünschter Schwellenwert ist.

8. Verfahren nach einem der vorstehenden Ansprüche, wobei die tonalen Informationen musikalische Töne umfassen.

9. Computerprogramm, umfassend Computerprogrammcodemittel, angepasst zum Durchführen des Verfahrens nach einem der Ansprüche 1 bis 8, wenn er durch einen Computerprozessor ausgeführt wird.

10. Computerprogramm nach Anspruch 9, verkörpert in einem computerlesbaren Medium.

11. System, umfassend:
eine Steuerung (25), konfiguriert zum Steuern einer Reziprokationsvorrichtung (20), wobei die Steuerung einen Prozessor (72) umfasst, konfiguriert zum Ausführen des Computerprogramms nach Anspruch 9, um die Schritte des Verfahrens nach einem der Ansprüche 1 bis 8 durchzuführen.

## Revendications

1. Procédé d'analyse d'un signal de bruit, comprenant les étapes suivantes :
réception d'un signal de bruit (75) capté par un capteur de cliquetis (28) placé dans un dispositif à mouvement alternatif (24), le dispositif à mouvement alternatif étant un moteur à combustion ;
préconditionnement (92) du signal de bruit (75) aux fins d'obtenir un signal de bruit préconditionné (79) ;
le procédé étant **caractérisé par** les étapes suivantes :
application (94) d'une enveloppe Attaque-Chute-Maintien-Extinction (ADSR) (82) au signal de bruit préconditionné (79) ;
extraction (96) d'informations tonales à partir du signal de bruit préconditionné (79) ; et
création (98) d'une empreinte (100) du signal de bruit (75) en fonction d'une combinaison de l'enveloppe ADSR et des informations tonales.

2. Procédé selon la revendication 1, dans lequel l'étape de préconditionnement (92) du signal de bruit comprend l'étape de mise à l'échelle du signal de bruit (75), chaque point de données contenu dans le signal de bruit (75) étant multiplié par un multiplicateur de façon à ce que le signal de bruit présente une amplitude maximale de 1.

3. Procédé selon la revendication 1 ou 2, dans lequel l'étape d'application (94) d'une enveloppe ADSR (82) comprend les étapes suivantes :
mesure d'un premier intervalle de temps entre un début du signal de bruit préconditionné (79) et un instant auquel le signal de bruit préconditionné (79) atteint une amplitude maximale (87) ;
mesure d'un deuxième intervalle de temps entre l'instant auquel le signal de bruit préconditionné (79) atteint l'amplitude maximale (87) et un deuxième instant auquel le signal de bruit (79) décline jusqu'à un niveau de maintien (85) ;
mesure d'un troisième intervalle de temps au cours duquel le signal de bruit préconditionné (79) se maintient ; et
mesure d'un quatrième intervalle de temps au cours duquel le signal de bruit préconditionné (79) décline du niveau de maintien (85) jusqu'à zéro.

4. Procédé selon l'une quelconque des revendications 1 à 3, comprenant l'étape d'ajustement signal de bruit préconditionné (79) sur une chirplet par :
détermination (104) si le signal de bruit préconditionné (79) présente une modulation ascendante et descendante ; et
réglage (105) d'un taux de modulation de la chirplet jusqu'à ce que la chirplet s'ajuste sur le signal de bruit (79).

5. Procédé selon la revendication 4, dans lequel, si le signal de bruit préconditionné (79) ne tente pas (112) de trouver une ondelette modulante correspondante, l'ondelette comprend une ondelette de Meyer, une ondelette de Morlet, une ondelette Chapeau mexicain ou une combinaison de celles-ci.

6. Procédé selon l'une quelconque des revendications 1 à 5, comprenant l'étape de vérification d'une caractérisation du signal de bruit (79) au moyen d'une analyse de suppression de bruit.

7. Procédé selon la revendication 6, dans lequel l'analyse de suppression de bruit comprend les opérations suivantes :
génération d'un signal généré en fonction de la caractérisation du signal de bruit préconditionné (79) ;
déphasage du signal généré de 180 degrés aux fins d'obtenir un signal déphasé ;
combinaison du signal déphasé au signal de bruit préconditionné (79) aux fins d'obtenir une tolérance résiduelle, et ;
acceptation de la caractérisation du signal de bruit préconditionné (79) si une tolérance résiduelle entre le signal de bruit et le signal généré est inférieure à une valeur seuil souhaitée.

8. Procédé selon l'une quelconque des revendications précédentes, dans lequel les informations tonales comprennent des tonalités musicales.

9. Programme d'ordinateur comprenant un moyen formant code de programme d'ordinateur adapté à mettre en oeuvre le procédé selon l'une quelconque des revendications 1 à 8, lors de son exécution par un processeur d'ordinateur.

10. Programme d'ordinateur selon la revendication 9, incorporé sur un support lisible par ordinateur.

11. Système, comprenant :
une unité de commande (25) configurée pour commander un dispositif à mouvement alternatif (20), l'unité de commande comprenant un processeur (72) configuré pour exécuter le programme d'ordinateur selon la revendication 9 afin de mettre en oeuvre les étapes du procédé selon l'une quelconque des revendications 1 à 8.
